Europäisches Patentamt

European Patent Office

Office européen des brevets

(19)

(11) **EP 1 182 533 A2**

(12) **EUROPEAN PATENT APPLICATION**

(43) Date of publication:
**27.02.2002 Bulletin 2002/09**

(51) Int Cl.[7]: **G06F 1/00**

(21) Application number: **01306775.6**

(22) Date of filing: **08.08.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **Smart Media Limited**<br>**Basingstoke, RG24 8NE (GB)** |
| | (72) Inventor: **Williams, Ian C.**<br>**Fleet, Hampshire GU12 0QE (GB)** |
| (30) Priority: **18.08.2000 GB 0020499** | (74) Representative: **Potter, Julian Mark et al**<br>**D. Young & Co., 21 New Fetter Lane**<br>**London EC4A 1DA (GB)** |

(54) **Apparatus, system and method for enhancing data security**

(57) A data processing system, comprises a first processing resource which is coupled to a communications network. A second processing resource is coupled to the first processing resource. The first and second processing resources are complementarily configured to establish a communications relationship between them for restricting the second processing resource to executing instructions which only perform allowable operations. The data processing system inhibits compromise of the second processing resource.

TRANSMISSION

FIG. 5

EP 1 182 533 A2

**Description**

The present invention relates to an apparatus, system, method and computer program for enhancing the security of information within a communications network. In particular, but not exclusively, the present invention relates to improving the security of sensitive information such as credit card details for an electronic commerce environment using an open network such as the Internet.

To enhance their functionality and to share resources, for example printers, scanners, etc, individual computer systems are often linked together to form computer networks. Such networks may be limited to individual organisations and even to discrete geographic locations for that organisation. For example, a particular building or even floor within a building. However, some computer networks comprise computer systems, which are geographically located at a distance from each other, even in other countries, for example. Often, such large area networks are not limited to individual organisations, but link computer networks of different organisations so that a large area network of computer networks is formed.

A particularly important example of such a network of networks is the Internet. The Internet comprises a network of computer systems and computer system networks spanning substantially the whole of the developed world and is based on client-server architecture. No one organisation owns or is responsible for the Internet as a whole. The computer systems and computer networks linked together by the Internet may be owned and operated by different organisations. Each computer system within the Internet has a unique address and can communicate with other computer systems within the Internet by using the other system's address. The format for communication between computer systems on the Internet is defined by the Internet Protocol (IP), in order to ensure that all the systems on the Internet can understand and communicate with each other. The telecommunication systems utilised by the Internet may comprise ISDN services, Plain Old Telephone Systems (POTS), Digital Subscriber Line (DSL), mobile or wireless communication systems such as cellular or satellite radio telephone systems, cable communication or other suitable telecommunications media.

A particularly useful piece of software for computer networks is something known as the World Wide Web (WWW). The WWW is most often used with the Internet, which fully utilises its functionality, but the software may also be used with other networks.

The term WWW is also used to refer to the body of information embodied in different media such as text, audio or video, for example, and stored on computer systems within the computer network, such as may form part of the Internet. The information is divided up into suitable segments, typically relating to the nature of the information, for example, an image may be formed as a graphics file, and a document as a text file. Additionally, such information may also comprise so-called Web pages which are datafiles comprising information, which may be of different types, and instructions on how to format that information when it is displayed on a computer screen. Within the WWW, not only do individual computer systems have addresses, but individual pieces or groups of information. Thus, by setting the correct address, it is possible from one computer system to access not just another computer system but a particular piece of information stored on that computer system.

The Internet and WWW have been utilised by many commercial organisations in order to provide an alternative route for provision of their goods and services to that offered by conventional trading or retail outlets. Such organisations make it possible to purchase goods and services over the Internet, for example books from the virtual bookshop at WWW.AMAZON.COM. Virtual stores such as AMAZON.COM operate substantially as conventional retailers but use a location on the Internet or WWW, known as a web site, to allow potential customers and purchasers access to the goods and services instead of via a conventional store.

Customers of virtual stores order goods over the Internet and pay the retail price, typically by providing their credit card details or by being invoiced separately. The actual transfer of funds from the customer or customer's agent in the case of credit card transactions occurs by the appropriate reconciliation process. Optionally, regular or established customers may have an account with the virtual store, which may be a credit card account or pool of funds lodged with the store. Whatever the payment process, for a true virtual purchasing experience, the purchaser will have conducted the whole of the transaction, including the provision of credit card details or personal details for the setting up of an account, over the Internet. Such information is sensitive and may be used by unscrupulous persons to commit theft or fraud, for example.

Computer systems, for example web servers, connected to the Internet, or other communications network have to perform many different functions. Thus, they tend to operate under a generic fully featured command or programming language such as Java or C++ for example. This renders them vulnerable to attack and compromise by so-called hackers using the fully featured command language of the web server to obtain unauthorised access to the computer programmes and databases which support the provision of services on the Internet. Such databases may comprise sensitive information, as mentioned above, but may also comprise information which although of significant commercial value is not in itself sensitive. Such information may comprise a properly indexed and organised database of population characteristics such as may be used by a marketing organisation, or company information such as that provided by commercial reporting organisations, e.g. Dun & Bradstreet. This information may be sold commercially and the providers of the information would wish to protect it from unauthorised access.

The danger of unauthorised access to, and the compromise of, servers holding sensitive or commercially valuable information can inhibit the use of the Internet for commercial transactions.

The present invention seeks to address at least one of the aforementioned problems.

Particular and preferred aspects of the invention are set out in the accompanying independent claims. Combinations of features from the dependent and/or independent claims may be combined as appropriate and not merely as set out in the claims.

In accordance with a first aspect of the present invention, there is provided a data processing system, comprising: a first processing resource coupleable to a communications network, and a second processing resource coupleable to the first processing resource. The first and second processing resources are configured to establish a communications relationship between them, whereby the second processing resource is restricted to implementing an instruction communicated from the first processing resource which only performs an allowable operation.

In accordance with a second aspect of the present invention, there is provided a method of operating a processing system including a first processing resource and a second processing resource. The method comprises establishing a communications relationship between the first and second processing resources whereby the second processing resource is restricted to executing an instruction communicated from the first processing resource which only perform allowable operations.

Embodiments in accordance with the first and second aspects of the present invention inhibit compromise of the second processing resource by restricting the instructions that can be executed by it. Such instructions are limited to those which implement functions which the operator of the second processing resource allows to be requested by or communicated from the first processing resource. Thus, unauthorised access, interrogation and control of the second processing resource is inhibited. Only those instructions which the operator of the second processing resource allow to be executed on the second processing resource, can be executed on the second processing resource. This provides improved security for e-commerce applications, in particular where account or credit card details may be stored by the e-commerce operator or merchant on the database associated with the second processing resource. For example, only allowing instructions for the storage of credit card details and for verifying that a credit card is current to be executed, would mean that it would not be possible to send an instruction for execution to the processing resource which looked for credit card details and returned them back to the first processing resource, where they may be accessed over the communications network. Evidently, other types of data may be associated with the second processing resource to which access needs to be restricted.

Preferably, the communications link between the first and second processing resource is a private or dedicated line. This further enhances the security of the second processing resource, since the processing resource is not connected to an open network or line.

In a particular embodiment in accordance with the first and second aspects of the invention, the first processing resource comprises a web server coupled to an open network such as the Internet. An embodiment in accordance with the present invention does not require a complex firewall to shield the web server from the Internet. Protection for sensitive information may be achieved by other means in accordance with embodiments of the present invention. Embodiments of the present invention allow the web server function to be detached and remote from the second processing resource, which may be used for sensitive processes. Embodiments of the present invention may provide a dedicated connection between the first and second processing resources which has limited but defined capabilities for allowing the first processing resource to be isolated from the second processing resource.

Preferably, the first processing resource is configured to transmit an instruction to the second processing resource when the instruction satisfies a predetermined criterion. Thus, the first processing resource acts as a form of filter to ensure that only allowable instructions are transmitted to the second processing resource. This is particularly advantageous in that only allowable instructions are transmitted to the second processing resource.

Optionally, the first processing resource is configured to transmit an instruction to the second processing resource and the second processing resource is configured to execute the instruction if the instruction satisfies a predetermined criterion. In such an embodiment, any type of instruction may be transmitted from the first processing resource to the second processing resource, and it is at the second processing resource that it is determined whether or not that instruction is allowable. This has an advantage in that it reduces the complexity and processing necessary by the first processing resource to determine allowable instructions for the second processing resource, leaving it to handle other functions associated with it being coupled to an open network.

Suitably, the predetermined criterion comprises the instruction being included in a set of allowable instructions for the second processing resource. The set of allowable instructions may be stored as a list or table at either the first or second processing resource, such that an instruction may be compared to the list or table to determine whether or not it is to be transmitted to the second processing resource, or the second processing resource is to execute it. Optionally, the predetermined criterion may comprise the instruction including a certain characteristic, for example a prefix identifying it as an allowable instruction. Thus, the first processing resource will only transmit to the second processing resource those instructions having the correct prefix, whilst the second processing resource will only execute those instructions it receives from the first processing resource which have the correct prefix. Optionally, the second processing resource may be configured such that the instruction set stored in an associated instruction table is limited or restricted to allowable instructions. No other instructions can be executed by the second processing resource, since they do not exist as instructions for that resource. Such a configuration is particularly advantageous, since there is no need to set prefixes to allowable instructions, nor check for the allowability of instructions at either the first or second processing resource.

Suitably, the second processing resource is configured to transmit an instruction fail message to the first processing resource in response to the second processing resource determining that the instruction does not satisfy the predetermined criterion, or is not executable.

In a particular embodiment of the invention, the second processing resource comprises a database of executable instructions which define the allowable functionality of the second processing resource. The database of instructions may comprise a list or table of executable instruction names, against which the second processing resource compares instructions received from the first processing resource, in order to determine whether or not they are allowable instructions.

In a particularly suitable embodiment of the present invention, the instruction comprises a computer program procedure name. A computer program running on the second processing resource, such as an application program, calls a predefined set of instructions stored in second processing resource which perform the function corresponding to the named computer program procedure. This advantageously enhances the functionality of the second processing resource by providing for more complex functions to be initiated via a single communication from the first processing recourse than possible by a single instruction.

The second processing resource is typically configured to provide a reply message to the first processing resource in response to the instruction or computer program procedure name satisfying the predetermined criterion.

The data processing system may comprise a first processing resource having a storage medium which is configured to store the instructions or computer program procedure name in a queue prior to transmitting the instructions to the second processing resource, which will take account of any delay in the transmission medium between the first and second processing resource and ensure that the instructions will eventually get to the second processing resource.

Typically, the instruction or computer program procedure name forms a part of a message created by the first processing resource for transmission to the second processing resource, and the storage medium included in the first processing resource is configured to store the messages in a queue prior to transmission to the second processing resource.

In a preferred embodiment, the first processing resource is configured to provide a message which includes an action code indicating the instruction type or procedure name type included in the message. The action code may be assigned a priority and the first processing resource can be configured to store messages in accordance with the priority assigned to the action code for that message. Thus, messages corresponding to more important actions will be placed at the top of the queue, ahead of messages corresponding to less important actions. Optionally, messages may be stored in accordance with their chronological order of creation or submission to the queue. The first processing resource may be configured to select a message for transmission to the second processing resource in accordance with a priority which is determined by the action code of the message stored in the queue. In this way, messages may be queued in accordance with their chronological creation order, but will be picked out of the queue in accordance with the priority of their associated action code.

In a particularly advantageous embodiment, the first processing resource is configured to transmit an instruction or message to the second processing resource in response to receiving a communication comprising sensitive information, and to discard the sensitive information from the first processing resource. Thus, the sensitive information is removed from the processing resource which is coupled to the open network, or access to it inhibited, thereby reducing the likelihood that unauthorised access can be made to that information. Sensitive information may comprise credit card details or personal details such as address of a customer, and may generally be understood to refer to any information which either a person submitting the information to the system or the operator of the system does not wish to be accessible or available to unauthorised persons.

In accordance with a third aspect of the present invention, there is provided a data processing system comprising a first processing resource coupleable to a communications network, and a second processing resource coupleable to the first processing resource. Responsive to receiving a communication comprising sensitive information the first processing resource is configured to transmit a message, typically representing at least a part of the sensitive information, to said second processing resource and is further configured to discard the sensitive information from the first processing resource.

Typically, the message representative of the sensitive information is derived from a communication received over the communications network. Sensitive information, such as credit card details are extracted from the communication received by the first processing resource, and input to a suitable message for transmission to the second processing resource and subsequent processing thereby.

In one embodiment, the part of the communication comprising sensitive information is discarded from the first processing resource in response to a transmission of the message representative of the sensitive information to the second processing resource. In another embodiment the first processing resource is configured to discard at least a part of the communication comprising the sensitive information held in the first processing resource in a predetermined time period. That time period may be a few minutes such as 2 minutes from receipt of the communication and preferably less than 1 minute from receipt of the communication and even more preferably the shortest possible time from receipt of the communication.

In a fourth aspect in accordance with the present invention, there is provided a data processing apparatus comprising a first processing resource coupleable to a communications network. The first processing resource is configured to transmit an instruction or program procedure name to a second processing resource coupleable to a non-open network coupled data processing apparatus corresponding to a communication received via the network, and is only transmitted for the instruction or program procedure name satisfying a predetermined criterion.

In a fifth aspect in accordance with the present invention, a data processing apparatus comprises a second processing resource configured to respond to an instruction or procedure name received from a first processing resource, and to execute only instructions or procedures received from that other data processing apparatus which satisfy a predetermined criterion.

In a sixth aspect in accordance with the present invention, a data processing system comprises a data processing resource coupleable to a communications network and a second processing resource coupleable to said first processing resource. The first processing resource and the second processing resource are configured to establish a communications relationship between them, whereby the second processing resource is restricted to implementing an instruction communicated from said first processing resource which only performs a predetermined allowable operation. The second processing resource is further configured to initiate a command mode for the remote control of the first processing resource via the second processing resource.

Embodiments in accordance with the sixth aspect of the present invention allow the remote control of a web server via a backend server, thereby relieving dependence upon an external network, such as the Internet. Moreover, the restricted communications relationship between the web server and backend server is maintained. Furthermore, it is unnecessary to have physical access to the web server, and thus maintenance, reconfiguration and control of the web server may be achieved remotely from a central location.

In the preferred embodiment, the second processing resource is configured to instruct the first processing resource for transfer of instructions to it in response to it initiating the command mode. Thereafter, the second processing resource is configured to transmit command instructions to the first processing resource for controlling the first processing resource. Advantageously, the command mode stops the normal flow of instructions and stored procedure calls, and commands are then issued by the owner of the system, or their agent, to the web server. The command session can then be closed and normal operation resumed. The comand mode is particularly suitable for ad hoc maintenance of a web server. Typically, update of data and files on the web server will be performed in a automatic update mode, separate from a command mode.

Suitably, the second processing resource comprises an instruction queue to which command instructions are sent prior to transmission to the first processing resource.

Preferably, the first and second processing resources are in communication via dedicated link. Such a link has the advantage that remove control of the first processing resource need not be conducted over an open network, such as the Internet. Thus, no trace of maintenance activity, such as identity codes, and command instructions, are sent or left on an open network. This enhances the security of the data processing system. Furthermore, if an open network is not available, maintenance is still possible over the dedicated link.

Another advantage of the dedicated link is that existing legacy systems may be used to maintain the first processing resource.

Specific embodiments in accordance with the present invention will now be described, by way of example only, and with reference to the drawings, in which:

Figure 1 is a schematic illustration of a computer network comprising server and client computer systems;
Figure 2 is a block diagram illustrating the components of the computer system of Figure 1;
Figure 3 is a block diagram illustrating an embodiment of the invention;
Figure 4 is a schematic illustration of web pages for an embodiment of the invention;
Figure 5 is a schematic illustration of the transmission of a special request message between a web server and a backend server in accordance with an embodiment of the invention;
Figure 6 is a flow diagram of the operation of a web server program in accordance with an embodiment of the invention;

Figure 7(a) illustrates the format of a special request message in accordance with an embodiment of the invention;

Figure 7(b) illustrates the format of the data payload for the special request message illustrated in Figure 7(a);

Figure 8 is a flow diagram of the operation of a serial server program in accordance with an embodiment of the invention;

Figure 9 is a flow diagram of the operation of a message received program in accordance with an embodiment of the invention;

Figure 10(a) is a flow diagram of the operation of a check action routine in accordance with an embodiment of the invention;

Figure 10(b) illustrates a table of allowable stored procedure names;

Figure 11 is a schematic diagram of an embodiment of a serial link;

Figure 12 is a schematic illustration of an embodiment of the invention operable in a command mode; and

Figure 13 is a block diagram illustrating the transmission of commands between a backend server and a web server in a command mode embodiment of the invention.

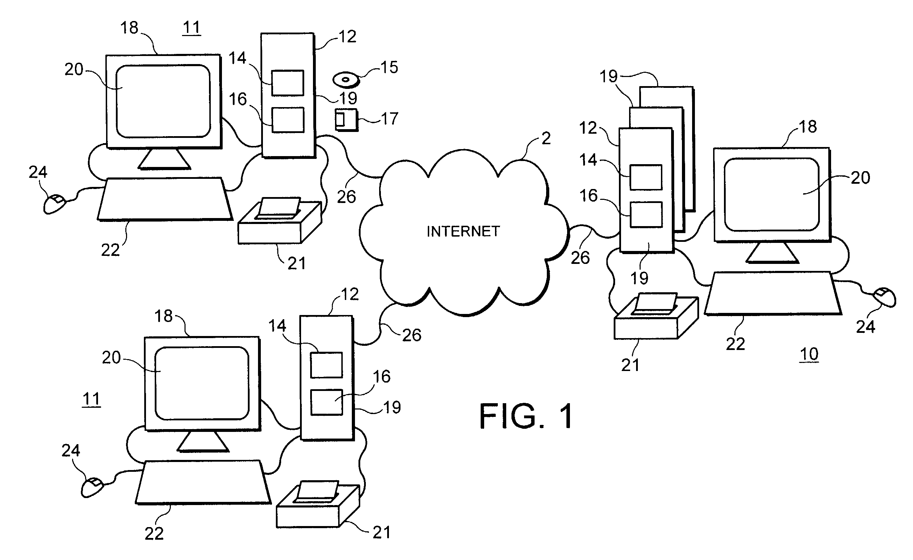

Referring now to Figure 1, there is illustrated a schematic representation of a network of computer systems, such as the Internet, comprising a server computer system 10 and client computer systems 11. Both the server computer system 10 and the client computer systems 11 comprise similar components, for example a system unit 12, a display device 18 with a display screen 20, and user input devices, including a keyboard 22 and a mouse 24. A printer 21 is also connected to the system. Each system unit 12 comprises media drives, including an optical disk drive 14, a floppy disk drive 16 and an internal hard disk drive not explicitly shown in Figure 1. A CD-ROM 15 and a floppy disk 17 are also illustrated. Additionally, the server computer system 10 comprises high capacity storage media, such as further magnetic hard disks 19, for example.

A computer program for implementing various functions or conveying various information may be supplied on media such as one or more CD-ROMs and/or floppy disks and then stored on a hard disk, for example. The computer system shown in Figure 1 is also connected, by a connection 26, to a network 2, which in the illustrated embodiment is the Internet but may be a local or wide area dedicated or private network, for example. A program implementable by a computer system may also be supplied on a telecommunications medium, for example over a telecommunications network and/or the Internet. For a client computer system 11 operating as a mobile terminal over a radio telephone network, the telecommunications medium may be a radio frequency carrier wave carrying suitably encoded signals representing the computer program and data or information. Optionally, the carrier wave may be an optical carrier wave for an optical fibre link or any other suitable carrier medium for a land line link telecommunication system.

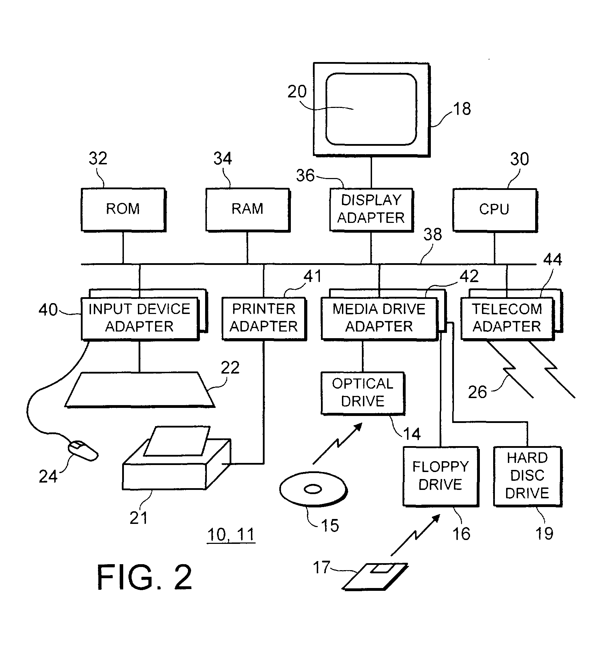

Referring now to Figure 2, there is shown a schematic and simplified representation of an illustrative implementation of a computer system such as that referred to with reference to Figure 1. As shown in Figure 2, the computer system comprises various data processing resources such as a processor (CPU) 30 coupled to a bus structure 38. Also connected to the bus structure 38 are further data processing resources such as read only memory 32 and random access memory 34. A display adaptor 36 connects a display device 18 to the bus structure 38. One or more user-input device adapters 40 connect the user-input devices, including the keyboard 22 and mouse 24 to the bus structure 38. An adapter 41 for the connection of the printer 21 may also be provided. One or more media drive adapters 42 can be provided for connecting the media drives, for example the optical disk drive 14, the floppy disk drive 16 and hard disk drive 19, to the bus structure 38. One or more telecommunications adapters 44 can be provided thereby providing processing resource interface means for connecting the computer system to one or more networks or to other computer systems. The communications adapters 44 could include a local area network adapter, a modem and/or ISDN terminal adapter, or serial or parallel port adapter etc, as required.

It will be appreciated that Figures 1 and 2 are schematic representations of one possible implementation of a computer system, suitable for either a server computer system 10 or a client computer system 11. It will be appreciated, from the following description of embodiments of the present invention, that the computer system in which the invention could be implemented, may take many forms. For example, rather than the server computer system 10 comprising a display device 18 and printer 21, it may be merely necessary for the server computer system 10 to comprise a processing unit, and be accessible by client computer systems 11. The client computer may also be a non-PC type of computer which is Internet- or network-compatible, for example a Web TV, or set-top box for a domestic TV capable of providing access to a computer network such as the Internet.

Optionally, the client computer may be in the form of a wireless PDA or a multimedia terminal.

Each computer system 10, 11 has a unique address within the Internet and within the terminology of the WWW these addresses are known as Uniform Resource Locators (URLs). Additionally, each entity within the WWW may also have a unique address or URL. An entity may comprise many different types of information, for example text, graphics, audio, video etc and is therefore referred to as a hypermedia document or entity.

Files comprising a single data type such as graphics files, audio file, video file, etc may also be found on the WWW, and are individually addressable. Within the WWW, hypermedia entities are created and handled using a programming language called Hypertext Markup Language (HTML). HTML provides a method of formatting entities by which the information content may be separated from the presentation of the entity. That is to say entities containing the same information may be presented in different ways. Other markup languages may be used, for example eXtensible Markup Language (XML).

WWW software is based on client-server architecture. A web client, for example a browser, is a computer program residing on a client computer system, which can send requests for information such as documents, to a web server. A web server is a program which, in response to a request from a client, sends documents (entities), or error messages if appropriate, requested by the requesting client. The web server resides on a server computer system 10 often also termed a "web server". The entity received by the client is stored on a client computer system 11, typically on the hard disc drive 19 in a process known as "cacheing". The client program typically resides on the hard disc drive 19 of the client computer system 11 and is operable to configure the client computer system 11 to interface with the Internet and WWW.

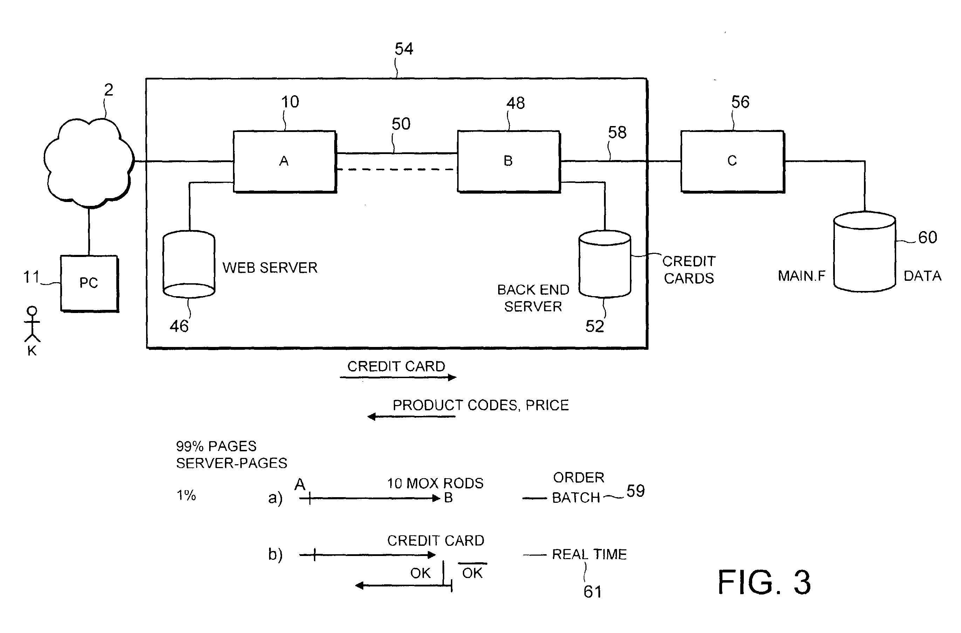

Figure 3 of the drawings schematically illustrates an embodiment in accordance with the present invention. Server 10 is a web server suitably embodied in a computing resource such as a computer system as illustrated in Figure 2 and operates to service access to and from network 2, which in this case, is the Internet. A client computer 11 can access web server 10 over the network 2. Web server 10 provides a gateway from network 2 to the services provided by an illustrative embodiment of the invention. Typically, web server 10 will provide web pages to the client computer 11 which provide an interface between the client computer 11 and the web server 10, to communicate information between them.

The web server 10 includes a database 46 stored on a high-capacity storage medium, for example, upon which are stored documents and files in the form of web pages (Hypertext Transfer Protocol HTTP formatted documents and files). A customer operating client computer system 11 may request a page from web server 10, which then retrieves the requested page from database 46 and sends it to the requesting client 11.

The illustrative embodiment of the invention also includes a backend server 48, which may be a typical computing resource as illustrated in Figure 2. Generally, the backend server 48 comprises a computer system providing a processing resource platform similar to that used for the web server 10. In a preferred embodiment of the invention, a dedicated communications channel 50 is disposed between web server 10 and backend server 48 for communicating messages between the web server 10 and backend server 48. Preferably, communications channel 50 is a non-network connected communications channel. In the present example, the dedicated communications channel 50 is a serial line, but may be a parallel connection. The communications channel 50 may comprise a twisted pair, optical fibre or wireless link, for example, and other suitable communications channels may be provided.

Backend server 48 also has a database, 52, again typically stored in a high-capacity storage device.

Web server 10, dedicated channel 50 and backend server 48, together with respective databases 46 and 52 provide an enhanced data processing system 54 for conducting transactions using a network such as the Internet. In a first example, data processing system 54 is used by a merchant to sell goods and services which are fulfilled by conventional delivery systems, such as delivery of goods by the postal service or courier services, or the provision of a service provider, such as a computer consultant, to the client's premises.

In this first example, the data processing system 54 is connected to the merchant's computer system, mainframe or network 56 by a communications channel 58. Preferably, the communications channel 58 is a private or dedicated line, coupled between the backend server 48 and the merchant computer system 56. Communications channel 58 may be any suitable form of communications channel, such as described above in relation to communications channel 50. The merchant's computer system 56 also includes a database 60, upon which the merchant's data, such as products, product codes and descriptions, product prices, etc are stored. The web server 10 runs suitable application software to provide an electronic or virtual "shop window" for the merchant. Typically, the web server 10 provides pages from the database 46 which provide access to information on the merchant's products, prices and services, etc, in response to a query from a client.

In general operation, the majority of communications between a client 11 and web server 10 involve requests for, and communication of, web pages stored in database 46 under control of the merchant's application software. However, if a client should wish to purchase any goods or services from the merchant then it is necessary for relevant financial information and address details, such as billing address, to be provided to the merchant. For a credit card transaction, the client's credit card details are supplied to web server 10, and subsequently communicated to backend server 48. Transfer of credit card details may be asynchronous in real-time, 61, or a group of such details may be collected and communicated in batches, 59, to backend server 48. Similarly, messages from back end server 48 such as verification ($OK$ / $\overline{OK}$) of a credit card may be communicated to web server 10 in asynchronous or batch mode.

Occasionally, information regarding products, product codes, prices, descriptions, images, etc for the merchant's goods and services require updating. This may be achieved by communicating updated information from the merchant's computer system 56 via backend server 48 and then to web server 10 via communications link 50. Such communications will typically be performed when the web server 10 is unlikely to be busy serving client's e.g. overnight and will be in batch mode. Such updating may also be achieved over an open network, via a separate communication link between the merchant computer system 56 or by portable storage media such as tape or disk.

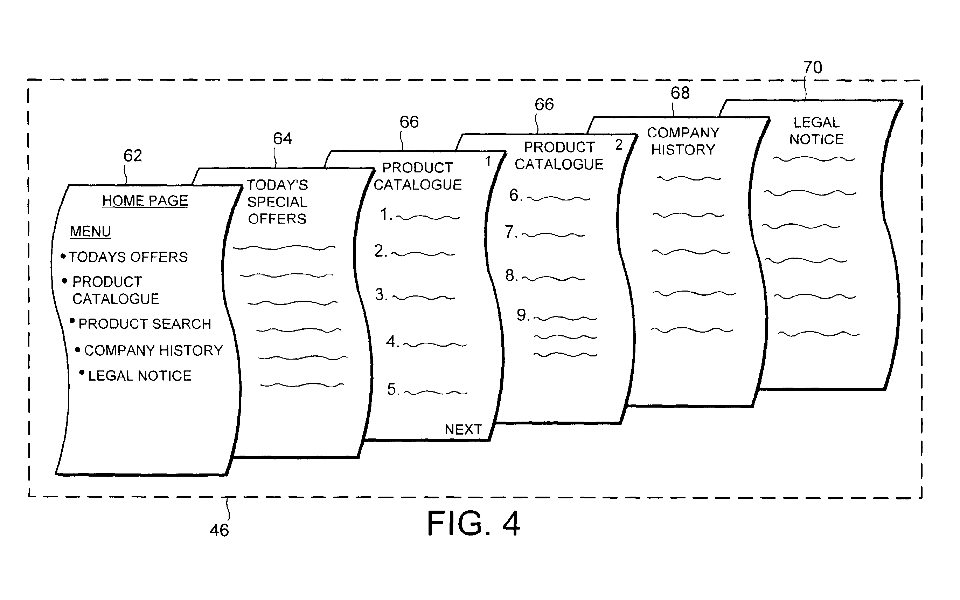

Referring now to Figure 4, it can be seen that the web server 10 database 46 includes a number of web pages. The web pages typically comprise welcome or home page 62, which has an introduction to the retailer and a menu of various web pages relating to the retailer's products and services. The menu typically comprises a list of HTML links to the other pages stored on the server database 46. The other pages may relate to any special offers, 64, the retailer's product catalogue 66, which includes details of the products, their price and availability. Additionally, the ability to search for various products may also be provided, as well as a company history page 68 and a legal notices page 70. As will be evident to an ordinarily skilled person many other types of pages may be provided.

The web server 10 services requests for pages from client 11 and sends them over the network 2 back to the client. Occasionally, the web server 10 receives a request for a special function or web page, herein termed a "special page", such as an order page for ordering a product. Ordering a product requires details of the customer, including their name, delivery and billing address and, depending on the method of payment, their credit card/debit card details or bank account details, for example. Such information comprises sensitive data, which should not be able to be accessed by unscrupulous or unauthorised persons.

In accordance with an embodiment of the present invention, the handling, manipulation and processing of such sensitive data is primarily carried out on the backend server 48. In an illustrative embodiment of the invention, an order page is stored on either database 46 or 52 and is sent to client computer system 11 in response to an order request, for completion and subsequent submission to the web server 10. On receiving a completed order request page, web server 10 informs the backend server 48 that a customer wishes to place an order and web server 10 then sends the order details to the backend server 48. The order details may be extracted from the order page and forwarded to the web server 10, or the order page itself may be transmitted to backend server 48. The order request details are received by backend server 48 and processed. The processing may be in real-time, for example credit/debit card verification provided by a simple *OK / OK* result sent back to web server 10, or may be off-line, such as arranging for delivery of the requested product, checking availability in the warehouse and arranging for debit of the credit/debit card account. Once the details have been passed to the backend server 48, they can be deleted from the web server 10. Since the backend server 48 is not network coupled, sensitive data comprising the details are prevented from being accessed from the Internet. The details may be deleted from the web server 10 immediately they have been passed to backend server 48, or backend server 48 has acknowledged receipt of the details, or they may be deleted on a periodic basis, such as once a day or once every suitable time period, e.g. every hour.

The detailed operation of data processing system 54 for a special request will now be described.

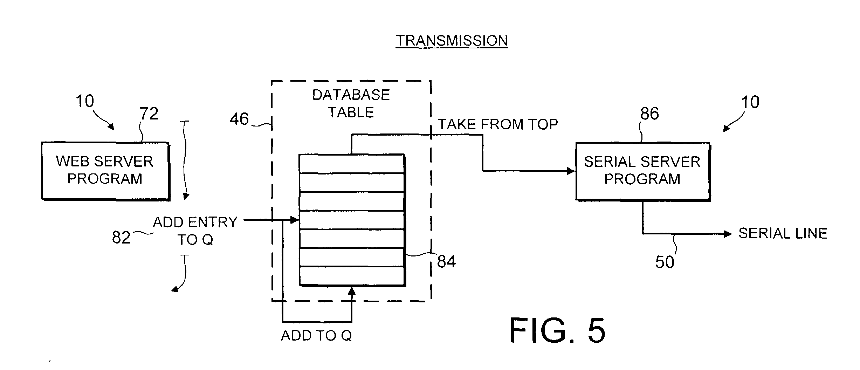

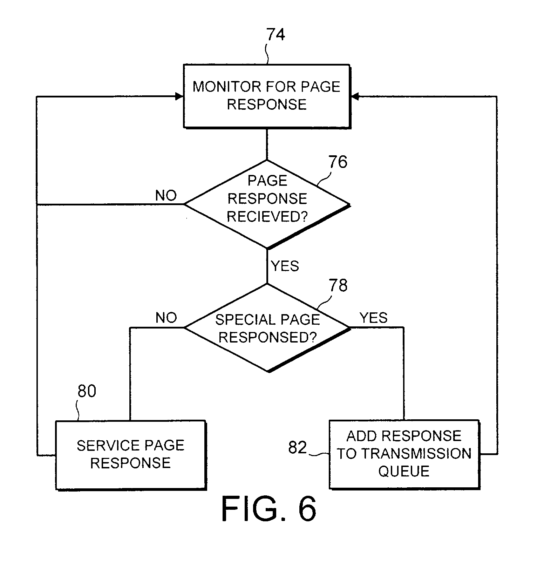

Figure 5 provides a schematic illustration of the transmission of a message, corresponding to a special request, from web server 10 to backend server 48. A web server program 72 runs on server 10, and services requests for pages received over network 2 from client computer systems 11. The flow diagram illustrated in Figure 6 describes the basic operation of the web server program 72. At step 74, the web server program monitors responses to pages received at the server and, at step 76, it is determined whether or not a page response has been received. If no response has been received, then web server program 72 control returns to step 74 where it continues monitoring for page responses. However, if a page response is received, then program control flows to step 78 at which it is determined whether or not a special page has been responded to. If the result at step 78 is "no" then program control flows to step 80, where the page response is serviced. If the result at step 78 is "yes", then program control flows to step 82 where a routine is called to add a special request message, corresponding to the special page, to transmission queue 84 illustrated in Figure 5.

Special pages include pages for which a response or communication to the backend server 48 is necessary. For example, when a client computer system 11 makes a request for a special page requiring completion and submission of sensitive information, such as an order page, the page is transmitted to the client computer system 11 as usual. The client completes the order and submits the completed order page to web server 10 and a special request message corresponding to the completed special page received by web server 10 is added to the transmission queue 84. Other special pages may be utilised for initiating and providing communication with the backend server 48 according to the application which a merchant or service provider operates.

The special request message is generally added to the bottom of the special request message queue 84 which resides on web server database 46 and is typically in the form of a table. However, the special request transmission queue 84 may also be stored in another form, as appropriate. In a simple embodiment, a serial server program 86 takes the special request message at the top of queue 84 and forwards it to the backend server 48 over the serial line 50.

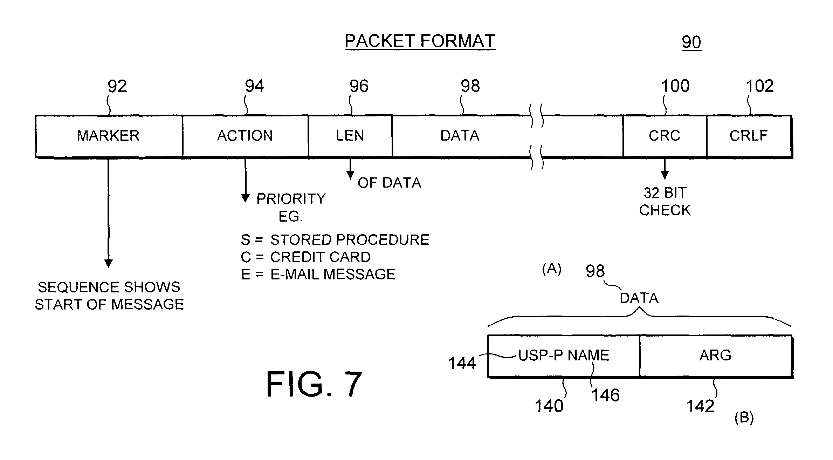

Web server 10 processes responses to special pages to form special request messages for forwarding to the backend server 48. The special request messages are in a packet format, as illustrated in Figure 7(a). The special request message packet 90 starts with a marker field 92 comprising a sequence of bits indicating the start of a special request message packet. The marker field 92 is followed by an action code field 94 which indicates the type of payload in the special request message packet 90. For example, an action code "S" indicates that the special request message payload is a stored procedure on the backend server 48. A "C" indicates that the special request message payload is a credit or debit card verification request, whilst an "E" code indicates that the message payload comprises an e-mail message. An e-mail message is likely to be sent when the backend server 48 wishes to respond to a query from a client 11 made via the web server 10 for providing information to a client 11 by the web server 10, such as a status report on an order request submitted by the client. Another use for e-mail messages is as acknowledgement of responses which can be routed via the web server 10 in order that a client 11 is provided with a single route or contact point during their transaction.

The next field, 96, in the special message packet format indicates the length of the payload data 98. Following the length field 96 is the data payload field 98, typically comprising a stored procedure name corresponding to the special request, for execution by the backend server 48. A cyclic redundancy check (CRC) 100 field is then provided, which is typically a 32 bit check sum derived from the special message packet 90. The special message packet 90 is terminated by a carriage return line feed 102.

An example of payload data 98 is illustrated in Figure 7(b) in which the payload comprises a stored procedure name 140 and its argument 142. A more detailed description of payload data will be provided hereinafter.

Preferably, the special message is constructed in ASCII code which allows visual inspection of the message and saving of the message to a file system of a computer, such as webserver 10, backend server 48 or merchant system 56.

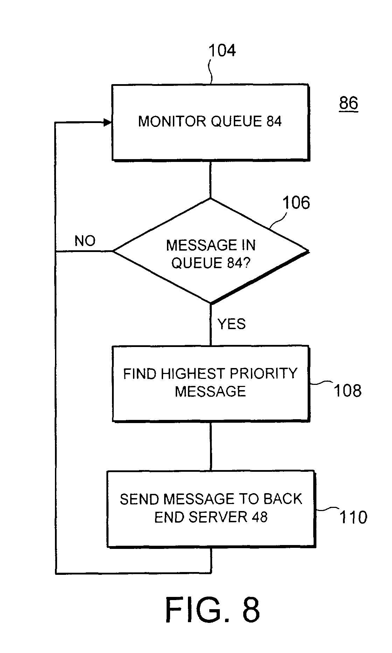

The serial server program 86 illustrated in Figure 5 configures web server 10 to transmit messages held in queue 84 to the backend server 48. In a preferred embodiment of the invention, serial server program 86 reviews the messages in queue 84 to determine the priority of each of the messages and transmits the messages in their priority order. Serial server program 86 determines the priority of a special request message by virtue of the action code 94 in the special request packet 90. This is due to the fact that each action is ascribed a priority level. For example, an action code "C" indicating a credit or debit card verification has a high priority since it is an action which should be completed quickly in order to provide a user with a prompt indication of whether their credit or debit card submission has been accepted by the system. An "E" action code may be assigned a low priority level since e-mail messages could be transmitted off-line in batches. The operation of the serial server program 86 will now be described with reference to the flow diagram illustrated in Figure 8.

Serial server program 86 begins at step 104 in which the queue 84 is monitored for any special request messages. At step 106, it is determined whether or not there is a special request message in queue 84. If the result at step 106 is "no", then the program control flows back to step 104. If the result at step 106 is "yes" then program control flows to step 108, where the highest priority message in queue 84 is identified. At step 110, the highest priority message identified in step 108 is transmitted over serial line 50 to the backend server 48. Program control then flows back to step 104 where monitoring of queue 84 continues. As described above, the highest priority message is found in step 108 with reference to the action code 94 in the special message packet 90. Additionally, the position of the message in queue 84 also determines the order in which the messages are transmitted. First, a message having a highest priority action code 94 is identified. However, there may be more than one message having the same high priority action code in queue 84 at any one time. Thus, special request messages having the same level of priority are transmitted in the order in which they have been placed in the queue 84, that is to say in a first-in-first-out order.

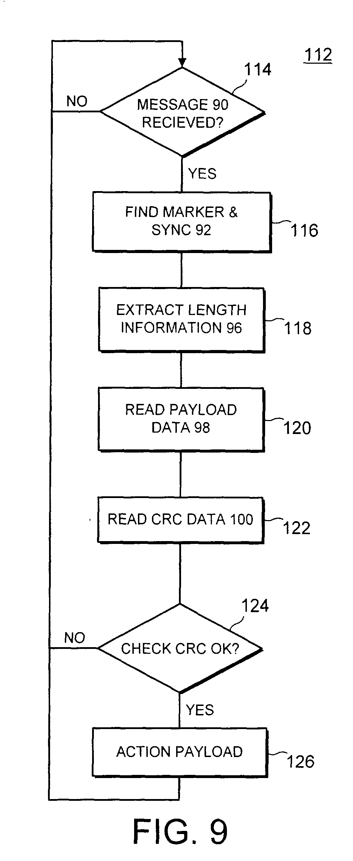

Backend server 48 is configured to receive special request messages forwarded from web server 10 in accordance with a message receive program 112, which operates in accordance with the flowchart illustrated in Figure 9. At step 114 of the flow diagram of Figure 9, message receive program 112 determines whether or not a message has been received from web server 10. If no message has been received, then program control returns to the monitoring state. If the result at step 114 is "yes", then program control flows to step 116 where marker field 92 is identified and used to synchronise the timing in message packet 90 with that of the backend server 48. The length, 96, of the payload data 98 is extracted from the special message packet format 90 at step 118 and the payload data 98 is read at step 120. The CRC data 100 is read at step 122 and used to check that the special message packet 90 has been transmitted correctly. If the CRC check fails at step 124, then the current message is dumped and program control flows to step 114 to determine whether or not a new message has been received. Optionally, a CRC failure may result in a message being sent from the backend server 48 to the serial server program 86 in the web server 10 requesting a resend of the message or an e-mail sent to the client 11, via web server 10, requesting resubmission of their request.

If the CRC check is passed at step 124 then program control flows to step 126 where the payload data is actioned. At step 126, the message receive program 112 calls an appropriate program routine in the backend server 48, to implement the data payload. Whilst the backend server 48 implements the data payload, the message receive program 112 control flows back to step 114 where it is determined if a next message has been received.

In one embodiment, backend server 48 is configured such that it is capable of executing only a limited number of procedures or routines stored on the backend server 48, i.e. stored procedures. Typically, the limited set of procedures executable by the backend server 48 is stored on the backend server database 52. The procedures executable by the backend server 48 are limited to performing only the functions which are necessary for the backend server 48 to operate. Thus, the complete functionality of the backend server 48 is defined by the stored procedures. General instructions are not included in the stored procedures for the backend server 48. Thus, an Electronic Commerce Operator (ECO) having a system for ordering goods and payment provides a restricted stored procedure list including stored procedures for inserting an order into order table, storing credit card details; obtaining credit card verification; and sending a verification result ($OK$ / $\overline{OK}$), for example, which access, store and process data on database 52 to service the special request.

In accordance with an embodiment of the invention, such a system has the order table residing on database 52, in order to inhibit access to it by an unscrupulous or unauthorised person through web server 10. In the following example, it will be seen that only certain functions can be performed by backend server 48. Thus, fraudulent or malicious attacked on backend server 48 are inhibited since it is not possible to send general instructions to access the information stored on backend server 48 and associated database 52. Providing that the limited stored procedure list is appropriately set up, the merchant or ECO will be able to restrict the actions that can be performed on backend server 48 to those solely concerned with the processing of orders etc initiated by a customer via client computer system 11. It would not be possible, for example, to search through database 52 to look for credit card or debit card details since such a procedure does not exist or is allowed.

Each stored procedure on backend server 48 begins with a header, followed by an argument. The basic format of the stored procedure is illustrated in Figure 7(b). The data payload segment 98 of the special request message packet format includes a stored procedure name "USP_pname" 140 and the argument(s) ARG 142 for implementing the stored procedure. Stored procedures executable by the backend server 48 are identified by a prefix such as leading tag "USP" 144, or other suitable tag, placed just before the procedure name "pname" 146.

An example of a stored procedure, "usp_ordlst_create", which adds a product line to an order will now be described. Each product line ordered by a client is transferred from webserver 10, where the order is received, to backend server 48. Stored procedure "usp_ordlst_create" is transferred to backend server 48 as part of the payload 98 of the order special request message. The arguments for "usp_ordlst_create" are also included in the payload 98 and include the order number, item number, product code, product description, quantity, VAT inclusive price, VAT exclusive price, discount, discount type code and message number. In these examples a prefix S| is used to indicate that what follows is a stored procedure call and the term "usp" is just part of the procedure name. The format of "usp_ordlst_create" is shown below for various orders:

```
20000327:110749          AM:Sending
S|usp_ordlst_create  81,-1,'DISCOUNT1','Special
Offer Discount',1,-43.50,-37.02,0.00,0,NULL|1

20000327:110749          AM:Sending
S|usp_ordlst_create 81,26432,'PACKPOST1','Post
& Packaging',1,5.00,4.26,0.00,0,'DEL'|2

20000327:110749          AM:Sending
S|usp_ordlst_create    81,34523,'G$GIFTW1','Gift
wrap Pokeman',1,0.00,0.00,0.00,0,'SVC$'|3

20000327:110749          AM:Sending
S|usp_ordlst_create    81,34527,'HCFT','Complimentary Financial Times ',1,0.00,0.00,0.00,0,'HCSVC$'|4

20000327:110749          AM:Sending
S|usp_ordlst_create    81,34539,'HCS$SNACK',
'Complimentary  Snack  on  First  Session',
1,0.00,0.00,0.00,0,'HCSVC$'|5

20000327:110750          AM:Sending
S|usp_ordlst_create    81,13423,'HCS$INSURANCE','Standard              Insurance',
1,0.00,0.00,0.00,0,'HCSVC$'|6

20000327:110750          AM:Sending
S|usp_ordlst_create 81,34543,'WE480867','Canon
LBP-800    A4    Laser    Printer',
1,250.00,212.77,0.00,0,'COMPRINT'|7

20000327:110750          AM:Sending
S|usp_ordlst_create  81,10033,'HCSUB12','Dallas
Health       Club       subscription',
1,35.00,29.79,35.00,4,'HC$'|8

20000327:110750          AM:Sending
S|usp_ordlst_create  81,12313,'ZEBEDEE','Zebedee',1,9.99,8.50,0.00,0,'MAGIC'|9

20000327:110750          AM:Sending
S|usp_ordlst_create    81,12313,'08923569','Busi-
```

ness Guide to Healthier Lifestyle', 1,24.99,21.27,2.50,2,'HCBOOK'|10

20000327:110750 AM:Sending S|usp_ordlst_create 81,23423,'SM480867','Toner Cartridge Black for Canon LBP-800', 1,39.99,34.03,4.00,2,'COMPACC'|11

20000327:110750 AM:Sending S|usp_ordlst_create 81,23425,'ERICKHFK2','Personal Hands-free Kit', 1,19.99,17.01,2.00,2,'MOBA'|12

The ordinarily skilled person will understand that other stored procedures for implementing various activities on backend server 48 for supporting e-commerce services may be implemented. The creation of such stored procedures are within the general skill and ambit of the skilled person.

Another stored procedure "usp_user_create_rec" creates a record of information about a client user, for example their IP address used to make an order, the browser used and the date of first access, for example. The format for such a stored procedure is shown below:

20000327:110750 AM:Sending S|usp_user_create_rec 385873838,1,'194.159.153.89','194.159.153.89', 'Mozilla/4.51 [en] (WinNT; I)','Mozilla/4.51 [en] (WinNT; I)',NULL,NULL,NULL, NULL,'','27 Mar 2000 10:59:19:233','27 Mar 2000 11:07:16:060'|12

In a particular embodiment of the invention, serial server program 86 is configured to transmit only special request messages in which the data segment 98 includes stored procedures having a prefix identifying it as an allowable stored procedure, e.g. leading "USP" tag or "S|" prefix. In such an embodiment, the serial server program 86 acts as a filter and only permits stored procedures allowed to be executed by the backend server 48 to be transmitted to the backend server. Optionally, the web server 10 may be configured such that it only formats and sends special request messages to queue 84 which include a stored procedure having a "USP" leading tag or "S|" prefix.

Optionally, the backend server 48 receive message program 112, filters incoming messages and looks for "USP" tags, or "S1" prefix in the datafield 98. Only stored procedures having the correct "USP" tag or prefix are then sent for processing and execution by the backend server 48. For further security, checking and filtering can be used at both the transmit (serial server program 86) and receive end of the transmission.

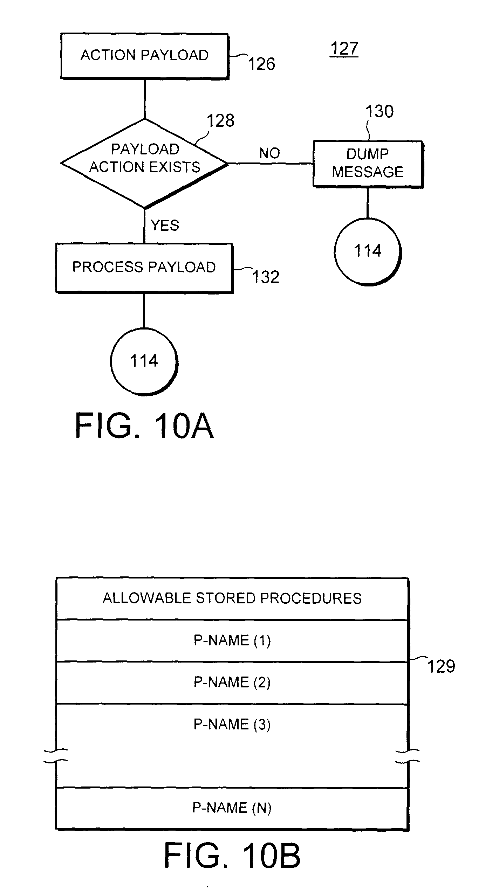

Referring back to Figure 9, from the action payload step 126, an initial check action routine 127 is entered which checks that the payload action can be executed by the backend server 48. Operation of the check action routine 127 will now be described with reference to the flow diagram of Figure 10(a).

At step 128, it is determined if the payload action corresponds to an executable procedure stored on the backend server 48. Typically, the payload action or stored procedure name contained in the payload is checked against a table 129, illustrated in Figure 10(b), of allowable procedures. If the action or stored procedure name, p-name(), is not in the table, then the message is dumped at step 130. Otherwise, the stored procedure contained in the payload is executed at step 132. Optionally, no check as such is performed on the procedure name in the action payload. If an executable procedure does not exist on the backend server 48 corresponding to the stored procedure name contained in the payload data 98, then the backend server is unable to execute the procedure. Consequently, that special request message cannot be actioned or executed by the backend server 48.

Further optionally, the procedure name is checked at step 128 for the content tag or prefix (usp or S|) indicating that it is an allowable procedure. If the tag or prefix exists, then the process proceeds to step 132, or else the message is dumped, 130.

In another application of the invention, the merchant (ECO) stores commercially sensitive data on database 52 or on database 60 within their own systems to which restricted access is possible. An example would be a service providing company and/or financial details or reports, such as Dun & Bradstreet reports or Bloomberg reports. The relevant company and financial information is stored on database 52 or 60. It is desirable for such a service to restrict complete access to the database, in order to protect the integrity of the data stored on that database and to maintain its commercial value. Thus, a limited set of executable procedures are stored on, allowed to be sent to or executed on the backend server, 48, which only relate to the functions which the provider of the service wishes to be carried out when accessing the data stored on the database. For example, stored procedures which only allow access to information on a database by way of a single company name, or single company registration number are executable by the backend server 48. However, no general instructions for reading a list of company names or searching through the data are provided.

Thus, the service company may ensure that a user of their services has paid for each company record they access.

In yet another application of the invention, credit values may be stored on the database. For example, if the service provider is a telephone service provider, for example mobile telephone service provider, customer account credits may be stored on the database. As is known, it is possible to operate "pay as you go" mobile telephones. For such telephones, a user purchases credit for making calls by way of a card. The cards have a unique number printed on them. A "scratch off" material is placed over the unique number in order to obscure it. A purchaser of the card scratches off the material obscuring the unique number and provides that to their service provider who credits their account with a call value corresponding to the value of the card which the user has purchased. However, this process is somewhat cumbersome and requires the provision of actual cards. This increases the cost and is not convenient for either the user nor for the service provider. In an embodiment of the invention, the service provider may allow for the updating of credit accounts. Credit or debit card details and account details are sent by a user via a service provider's web page on web server 10. These details are then forwarded in accordance with the special request message format described in Figure 7 to backend server 48, together with a request for credit of a certain value against the user's telephone account. Evidently, such requests must be safe from fraud. By having a limited number of executable stored procedures on backend server 48, it is possible to limit updating of an account to be associated with the debiting of a credit or debit card account. Thus, it is possible for a user to update their service provider account over a computer network, such as the Internet, and to be relieved of the need to purchase cards. A similar process could be used for updating "toll" cards or accounts for motorway tolls or bridge or tunnel tolls, for example.

Although not strictly necessary, the data processing system 54 includes handshaking routines between the web server 10 and the backend server 48 in order to ensure reliable delivery of messages sent between them. For example, when the web server 10 is informed that a backend server 48 had received a transmission and *vice versa*. To assist in such handshaking protocols, extra lines are provided on serial cable 50 for flow control. In an illustrative embodiment, one extra line may comprise a voltage or current level indicating that the backend server 48 is busy. Thus, the web server 10 is able to avoid sending messages to the backend server 48 unnecessarily, at a time when the backend server 48 cannot receive or process them. A further line may be provided for indicating the presence of the backend server 48 so that messages are not put on serial line 50 without the backend server being present. This is particularly useful for ensuring that messages are not sent to the backend server 48 when it has "fallen over" and is out of use. In a symmetrical fashion, control lines may also be provided for the control of messages for the backend server 48 to the web server 10.

Web server 10 and backend server 48 are independent of each other. They perform different functions and one does not rely on the other for performing their individual functions. Thus, if a web server 10 should cease operation, for example due to an interruption in the power supply, the backend server 48 can continue processing the special request messages it has already received from the web server. Also, since queue 84 is stored on database 46, then the queued messages on the web server 10 are not lost should the web server cease to operate at any point. Once the web server 10 has been made operational again, the serial server program 86 can begin sending messages from the queue 84 again. Similarly, if the backend server 48 should cease to function, web server 10 can still provide an interface to clients and customers over the computer network 2 and store any special request messages in queue 84. Queue 84 would then just increase in length until such time as the serial server program 86 detects the presence of the backend server 48 again, and can re-start sending messages from the queue 84 to the backend server 48.

The foregoing embodiments have been described in terms of messages transmitted from the web server 10 to the backend server 48. However, the data processing system 54 may be configured to operate symmetrically, i.e. messages may be sent from the backend server 48 to web server 10. In such a configuration, stored procedures are executed on backend server 48 which returns a result for processing by the web server 10, or which may be forwarded to client 11. In this configuration, server 48 includes a queue stored on database 52, similar to the queue stored on database 46 by the web server 10. The backend server 48 is configured to include a program to transmit messages to the web server 10 which is similar to the serial server program 86. Additionally, the message packet format is similar to that as described with reference to Figure 7. In particular, action codes may be included in the message format which indicate the priority of the message. Typically, messages such as credit/debit card verification results ($OK / \overline{OK}$) are transmitted from the backend server 48 to the web server 10. Such messages would have a high priority since it is desirable that they be actioned in real-time or as promptly as possible. A simple ($OK / \overline{OK}$) (yes/no) result is sent from the back end server 48 to the web server 10 which forwards the result to the client computer system for display on the client computer display screen. Other messages which may be sent from the backend server 48 to the web server 10, include status report messages, such as indicating that a request is being processed or an order is being processed, as well as a simple acknowledgement that an order has been received. Such messages may be send by way of e-mail to the client computer system via web server 10. Such messages need not have such a high priority as the credit card verification result message.

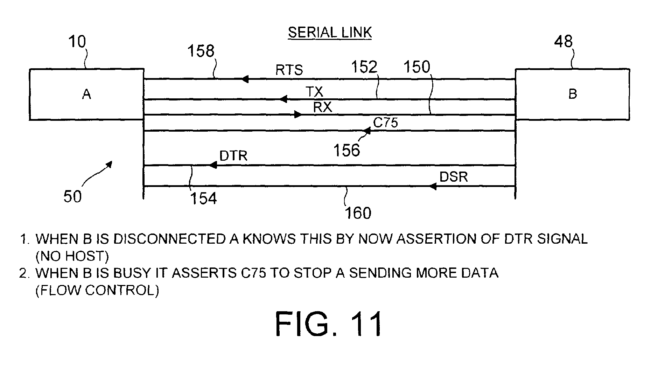

An example of serial link 50 is illustrated in Figure 11. Serial link 50 is coupled between web server 10 and backend server 48. Serial link 50 includes serial receive line 150 for backend server 48 and serial transmit line 152 for transmitting messages from backend server 48 to web server 10. In a preferred embodiment, serial link 50 also includes flow control lines such as DTR line 154 which indicates that backend server 48 is disconnected and that the web server 10 should not send the messages to the backend server 48. Typically, the DTR signal is a voltage or current level asserted on the line: When web server 10 determines that the voltage or current level is not asserted on DTR then it knows that backend server 48 is disconnected. Another flow control line is the "CTS" 156 (clear to send) line. When the backend server 48 is busy, it asserts a voltage or power level, typically active low, in order to inform the web server 10 that it should not send any more data. When the CTS line 156 is clear then the web server 10 knows it can send data to the backend server 48. Other lines typically included are a ready-to-send (RTS) line 158 indicating to web server 10 that the backend server 48 is ready to send a message to web server 10. The serial link also includes a DSR (data set ready) line 160 for indicating when the backend server 48 is ready to send data.

As described above, web server 10 and backend server 48 are independent of each other. One advantage of this is that either one of web server 10 or backend server 48 may become inoperable without interfering with the operation of the other. A further advantage of such a configuration is that respective parts of data processing system 54, that is to say web server 10 and backend server 48 may be updated and maintained independently of each other from time to time.

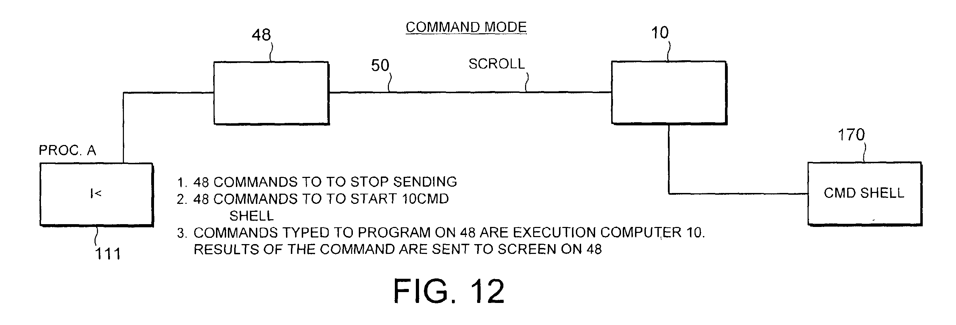

In another embodiment in accordance with the invention, data processing system 54 is configurable to operate in a so-called "command" mode. A block diagram illustrating operation of data processing system 54 in the command mode is illustrated in Figure 12. Such a command mode is typically established on an ad hoc basis for performing emergency maintenance and address interruptions in service on the web server 10.

As illustrated in Figure 12, a command shell 170 is established on web server 10. The command shell 170 is used to establish a control session between backend server-48 and web server 10. In the command mode, a special instruction is sent from the backend server 48 to the command shell 170 established on web server 10 to turn the serial server program 86 off. Thus, no more messages will be sent from web server 10 to backend server 48. Likewise, backend server 48 is also inhibited from sending any messages to web server 10 from the backend server message queue stored on database 52. The command shell 170 on web server 10 comprises a special program which receives messages from the backend server 48 indicating that the backend server wishes to perform certain functions on the web server. In this way, a control session between backend server 48 and web server 10 is established. During the command mode, commands, typically from a keyboard, sent to backend server 48 are executed on web server 10. What would normally be displayed on a display screen associated with web server 10 is now displayed on the display screen associated with backend server 48. In this way, it is possible to control web server 10 and backend server 48.

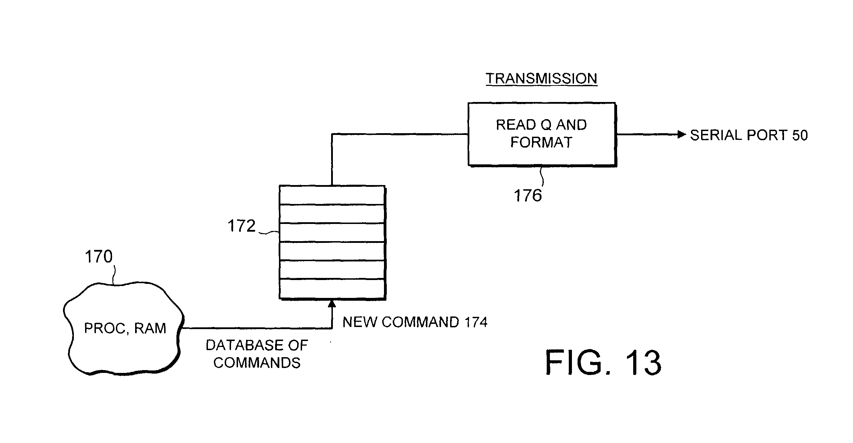

Figure 13 is an illustration of a block diagram describing how commands are transmitted from the backend server 48 to the web server 10 during the command mode. The command shell 170 sends commands for execution by the web server 10 to a database or table of commands 172. New commands 174 are added to the bottom of table 172. Table 172 is read and the commands formatted, 176, prior to being transmitted over serial port 50 to web server 10. Typically, all the commands necessary to perform the update and maintenance of web server 10 are transmitted from the backend server 48 to the web server 10. Typical maintenance operations are the updating of web pages stored in web server database 46. Advantageously, updated web pages can be prepared on backend server 48 or a user's computer system 56 and transmitted to web server 10 only when a command shell has been set up.

A particularly advantageous arrangement is for maintenance operations to be conducted by a third party agent 111 of the data system owner, via a dial-in connection to the backend server 48. Thus, the web server 10 can be mainained by a trusted third party via the backend server 48, from a location remote from backend server 48. Commands and responses are then displayed on a display screen local to the remote dial-in apparatus.

Suitably, the setting up of a command shell and maintenance of web server 10 may be automated, particularly in the in case of updating web pages, such that the web pages are manually updated on the backend server 48 or computer system 56 during the day and sent to web server 10 via the automatic setup of a command shell at a suitable time overnight.

The performance of maintenance and update of web server 10 by the backend server 48 over dedicated link 50 is advantageous in that access over an open network, 2, is unnecessary. Via backend server 48, it is possible to directly work on web server 10. This improves the security of the interactive session since the backend server 48 itself may be made secure and instructions to web server 10 sent by a non-public route. The security of the interactive session is enhanced by ensuring that the dedicated link 50 is also secure, as well as the backend server 48. Another advantage of utilising a dedicated link 50 for updating web server 10 is that no "footprint" or trace is left on an open network. Thus, it would be difficult for unscrupulous or unauthorised persons, such as hackers, to monitor update and maintenance activities on web server 10 with a view to compromising web server 10. Furthermore, use of a dedicated line reduces the need for encryption of the control messages, although encryption could also be used to further enhance security.

Another aspect of the command mode feature is that it is possible to increase the functionality of the processing system 54. Further functionality of backend server 48 may be included in the system by adding new stored procedures to the stored procedure list of executable procedures stored on database 52. Correspondingly, web server 10 is updated and configured for having the new stored procedures forming special request messages as payload data. The data processing system 54 basically provides a simple transport mechanism for the exchange of messages between web server 10 and backend server 48. Increasing the functionality of processing system 54 does not require significant reprogramming of the overall system, but merely the addition of the new procedures to the restricted list of procedures on backend server 48, together with suitable updating of web server 10 such that it is known that it is possible to send special request messages corresponding to new procedures to the backend server 48.

In a preferred embodiment, backend server 48 saves all messages sent to it from web server 10 in a text file. If database 52 should crash, i.e. cease functioning, then messages which have previously been sent to it from web server 10 can be copied from the text file and resent to backend server 48, when the backend server has been set operational again. Optionally, an owner of data processing system 54 can copy messages stored in the text file to a suitable carrier medium such as a floppy disc. Typically, copying the stored messages from the text file to a floppy disc will occur once the backend server 48 has come back into operation.

Once the backend server 48 is operational, the stored messages may be input via web server 10 and replayed to the backend server 48. Typically, this would be done by configuring web server 10 to replay the message file to its communications port coupled to dedicated link 50. A separate computer system local to the backend server 48, for example the owner's computer 56, may be utilised to forward the stored messages to the backend server 48, such that the backend server can receive them as if they were normal messages forwarded from web server 10 and process them accordingly. Thus, it is possible to reset backend server 48 to its configuration prior to its crash, thereby avoiding any interruption or loss of special request messages. In a preferred embodiment of the invention, the special request messages are in ASCII format, which allows them to be viewed as text messages, and easily saved to a computer file for subsequent retransmission to the backend server 48, without any extra processing, formatting or reconfiguration.

A data processing system 54, configured in accordance with embodiments of the invention obviates the need for providing a firewall between the web server 10 and the host computer, in this case the backend server 48. This is because the backend server 48 can only perform functions and procedures which the owner of the system has determined are safe to be performed, and will reduce or inhibit the likelihood of backend server 48 being compromised by unauthorised access by web server 10.

Insofar as embodiments of the invention described above are implementable, at least in part, using a software-controlled programmable processing device such as a Digital Signal Processor, microprocessor or other processing device, it will be appreciated that a computer program for configuring a programmable device to implement the foregoing described methods is envisaged as an aspect of the present invention. The computer program may be embodied as source code and undergo compilation for implementation on a processing device, or may be embodied as object code.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

In view of the foregoing description it will be evident to a person skilled in the art that various modifications may be made within the scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1.    A data processing system, comprising:

a first processing resource coupleable to a communications network; and
a second processing resource coupleable to said first processing resource;
said first processing resource and said second processing resource configured to establish a communications relationship between them, whereby said second processing resource is restricted to implementing an instruction communicated from said first processing resource which only performs a predetermined allowable operation, thereby inhibiting compromise of said second processing resource.

2.    A data processing system according to claim 1, said first processing resource configured to transmit said instruction to said second processing resource for said instruction satisfying a predetermined criterion.

3. A data processing system according to claim 1, wherein

> said first processing resource is configured to transmit an instruction to said second processing resource; and
> said second processing resource is configured to execute said instruction for said instruction satisfying a predetermined criterion.

4. A data processing system according to claim 3, said predetermined criterion comprising said instruction being included in a predefined set of allowable instructions for said second processing resource.

5. A data processing system according to any one of claims 1, 2 or 3, said predetermined criterion comprising said instruction being identified as an allowable instruction for said second processing resource.

6. A data processing system according to claim 3, 4 or 5, said second processing resource configured to transmit an instruction fail message to said first processing resource responsive to said second processing resource determining said instruction failing to satisfy said predetermined criterion.

7. A data processing system according to any preceding claim, said second processing resource comprising a database of executable instructions defining predetermined allowable functionality of said second processing resource.

8. A data processing system according to any preceding claim, said instruction comprising a computer program procedure name.

9. A data processing system according to any one of claims 2 to 8, said second processing resource configured to provide a reply message to said first processing resource responsive to an instruction satisfying said predetermined criterion.

10. A data processing system according to any preceding claim, said first processing resource comprising a storage medium configured to store said instruction in a queue prior to transmission to said second processing resource.

11. A data processing system according to any preceding claim, said instruction comprised in a message for transmission to said second processing resource.

12. A data processing system according to claim 11, said first processing resource comprising a storage medium configured to store said message in a queue prior to transmission to said second processing resource.

13. A data processing system according to claim 11 or 12, said first processing resource configured to provide a message including an action code indicative of an instruction type included in said message.

14. A data processing system according to claim 13, said first processing resource configured to store said message in accordance with a priority assigned to said action code.

15. A data processing system according to claim 13, said first processing resource configured to store said message in accordance with their chronological order.

16. A data processing system according to claim 15, said first processing resource configured to select a stored message for transmission to said second processing resource in accordance with a priority determined by said action code of said message.

17. A data processing system according to any preceding claim, said first processing resource configured to transmit said instruction or message responsive to receiving a communication comprising sensitive information and to discard said sensitive information from said first processing resource.

18. A data processing system, comprising:

> a first processing resource coupleable to a communications network; and
> a second processing resource coupleable to said first processing resource;
> said first processing resource configured to transmit a message to said second processing resource responsive to receiving a communication via said network comprising sensitive information, and further configured to discard said sensitive information from said first processing resource.

19. A data processing system according to claim 17 or 18, said message representing sensitive information derived from said communication.

20. A data processing system according to claim 19, wherein said sensitive information is discarded in response to transmission of said message comprising sensitive information to said second processing resource.

21. A data processing system according to any one of claims 17 to 20, said first processing resource configured to discard said sensitive information within a predetermined time period.

**22.** A data processing system according to claim 21, wherein said time period is less than two minutes from receipt of said communication, preferably less than one minute from receipt of said communication, and more preferably the shortest possible time from receipt of said communication.

**23.** A data processing apparatus, comprising:

a first processing resource coupleable to a communications network; said first processing resource configured to transmit an instruction to a second processing resource disposed in a non-open network coupled data processng apparatus, responsive to receiving a communication via said network, for said instruction satisfying a predetermined criterion.

**24.** A data processing apparatus according to claim 23, further comprising a storage medium to store said instructions in a queue prior to transmission to said second processing resource.

**25.** A data processing apparatus according to claim 23 or 24, wherein said first processing resource is configured to form a message including said instruction for transmission to said second processing resource.

**26.** A data processing apparatus according to claim 25, wherein said first processing resource is configured to form a message including an action code indicative of an instruction type included in said message.

**27.** A data processing apparatus according to claim 26, wherein said first processing resource is configured to store messages in accordance with a priority assigned to said action code.

**28.** A data processing apparatus according to claim 26 or 27, wherein said first processing resource is configured to store messages in accordance with their chronological order.

**29.** A data processing apparatus according to any one of claims 23 to 28, said first processing resource configured to transmit said instruction or message responsive to receiving a communication comprising sensitive information and to remove at least that part of said communication comprising said sensitive information from said first processing resource.

**30.** A data processing apparatus, comprising:

a second processing resource configured to respond to an instruction received from another processing resource disposed in another data processing apparatus to execute only instructions satisfying a predetermined criterion.

**31.** A data processing apparatus according to claim 30, further comprising a database of executable instructions defining predetermined allowable functionality of said data processing apparatus.

**32.** A data processing apparatus according to any one of claims 23 to 31, said instruction comprising a computer program procedure name.

**33.** A data processing apparatus according to any one of claims 23 to 32, said predetermined criterion comprising said instruction or computer program procedure being included in a predefined set of allowable instructions or computer program procedures for said second processing resource.

**34.** A data processing apparatus according to any one of claims 23 to 33, said predetermined criterion comprising said instruction or computer program procedure being identified as an allowable instruction or computer program procedure for said second processing resource.

**35.** A method for operating a processing system including a first processing resource and a second processing resource, the method comprising:

establishing a communications relationship between said first and second processing resource whereby said second processing resource is restricted to implementing an instruction communicated from said first processing resource which only performs a predetermined allowable operation, thereby inhibiting compromise of said second processing resource.

**36.** A method according to claim 35, further comprising said first processing resource transmitting said instruction to said second processing resource for said instruction satisfying a predetermined criterion.

**37.** A method according to claim 35, said first processing resource transmitting an instruction to said second processing resource, and said second processing resource executing said instruction only if said instruction satisfies a predetermined criterion.

**38.** A method according to claim 37, said predetermined criterion comprising said instruction being included in a predetermined set of allowable instructions for said second processing resource.

**39.** A method according to any one of claims 35 to 37, said predetermined criterion comprising said instruction being identified as an allowable instruction by said second processing resource.

40. A method according to claim 37, 38 or 39, further comprising said processing resource transmitting an instruction fail message to said first processing resource responsive to said second processing resource determining said instruction failing to satisfy said predetermined criterion.

41. A method according to any one of claims 35 to 40, said second processing resource comprising a database of executable instructions defining predetermined allowable functionality of said second processing resource.

42. A method according to claim 41, dependent on claim 38 or 39, further comprising said second processing resource comparing said instruction with said database of executable instructions for determining whether said instruction is an allowable instruction.

43. A method according to any one of claims 35 to 42, said instruction comprising a computer program procedure name.

44. A method according to any one of claims 35 to 43, further comprising said second processing resource providing a reply message to said first processing resource responsive to said second processing resource determining that an instruction satisfies said predetermined criterion.

45. A method according to any one of claims 35 to 44, further comprising said first processing resource storing said instruction in a queue prior to transmitting said instruction to said second processing resource.

46. A method according to any one of claims 35 to 45, said first processing resource forming a message comprising said instruction and transmitting said message to said second processing resource.

47. A method according to claim 46, further comprising said first processing resource storing said message in a queue prior to transmitting said message to said processing resource.

48. A method according to claim 46 or 47, further comprising said first processing resource forming said message to include an action code indicative of an instruction type included in said message.

49. A method according to claim 48, further comprising said first processing resource storing said message in accordance with a priority assigned to said action code.

50. A method according to claim 48, further comprising said first processing resource storing said message in accordance with a chronological order.

51. A method according to claim 50, further comprising said first processing resource transmitting a message to said second processing resource in accordance with a priority determined by said action code of said message.

52. A method according to any one of claims 35 to 51, further comprising said first processing resource transmitting said instruction or message in response to receiving a communication comprising sensitive information and discarding said sensitive information from said first processing resource.

53. A method for operating a processing system including a first processing resource and a second processing resource, the method comprising: said first processing resource transmitting a message to said second processing resource responsive to receiving a communication comprising sensitive information, and discarding said sensitive information from said first processing resource.

54. A method according to claim 52 or 53, further comprising said processing resource deriving sensitive information from said communication, and including said sensitive information in said message.

55. A method according to claim 54, further comprising said first processing resource discarding said sensitive information in response to a transmission of said message comprising said sensitive information to said second processing resource.

56. A method according to any one of claims 52 to 55, further comprising said first processing resource discarding said sensitive information comprising said sensitive information from said first processing resource within a predetermined time period.

57. A method according to claim 56, wherein said time period is less than 2 minutes from receipt of said communication, preferably less than 1 minute from receipt of said communication and more preferably the shortest time possible from receipt of said communication.

58. A data processing system comprising:

    a first processing resource coupleable to a communications network;
    a second processing resource coupleable to said first processing resource;

said first processing resource and said second processing resource configured to establish a communications relationship between them, whereby said second processing resource is restricted to implementing an instruction communicated from said first processing resource which only performs a predetermined allowable operation;

said second processing resource further configured to initiate a command mode for remote control of said first processing resource via said second processing resource.

59. A data processing system according to claim 58, said second processing resource configured to instruct said first processing resource to halt transmission of instructions to said second processing resource, responsive to initiating said command mode.

60. A data processing system according to claim 58 or 59, said second processing resource configured to transmit command instructions to said first processing resource for controlling said first processing resource.

61. A data processing system according to claim 60, said second processing resource comprising an instruction queue and wherein said command instructions are sent to said instruction queue via transmission to said first processing resource.

62. A data processing system according to any one of claims 58 to 61, said first processing resource and said second processing resource in communication via a dedicated link.

63. A method for operating a processing system including a first processing resource and a second processing resource, the method comprising:

establishing a communications relationship between said first and second processing resources, whereby said second processing resource is restricted to implementing an instruction communicated from said first processing resource which only performs a predetermined allowable operation; and

said second processing resource initiating a command mode for remote control of said first processing resource via said second processing resource.

64. A method according to claim 63, further comprising said second processing resource instructing said first processing resource to halt transmission of instructions to said second processing resource in response to said second processing recourse initiating said command mode.

65. A method according to claim 63 or 64, further comprising said second processing resource transmitting command instructions to said first processing resource for controlling said first processing resource.

66. A computer program translatable for configuring a data processing apparatus or system to implement a method in accordance with any one of claims 35 to 57 or 63 to 65.

67. A computer program for configuring a data processing apparatus or system to implement a method in accordance with any one of claims 35 to 57 or 63 to 65.

68. A carrier medium, carrying a computer program in accordance with claim 66 or 67.

69. A carrier medium in accordance with claim 68, said carrier medium comprising one of the following:

a solid-state memory;
a magnetic tape memory medium;
a magnetic disc such as a floppy disc storage medium;
an optical storage medium;
a communications carrier signal such as an RF carrier signal or optical carrier signal; and
an electronic signal.

FIG. 1

FIG. 2

EP 1 182 533 A2

FIG. 3

MAIN.F DATA  60

C  56

58

CREDIT
CARDS

BACK END
SERVER  52

B  48

54

50

A  10

WEB SERVER  46

2

PC  11

CREDIT CARD

PRODUCT CODES, PRICE

99% PAGES
SERVER-PAGES

1%

a)  A ├─── 10 MOX RODS ──▶ B

ORDER
─── BATCH ─ 59

b)  ├─ CREDIT CARD ──▶
OK │ OK

REAL TIME
61

21

FIG. 4

HOME PAGE

MENU

• TODAYS OFFERS
• PRODUCT CATALOGUE
• PRODUCT SEARCH
• COMPANY HISTORY
• LEGAL NOTICE

TODAY'S SPECIAL OFFERS

PRODUCT CATALOGUE 1

1.
2.
3.
4.
5.

NEXT

PRODUCT CATALOGUE 2

6.
7.
8.
9.

COMPANY HISTORY

LEGAL NOTICE

EP 1 182 533 A2

EP 1 182 533 A2

TRANSMISSION

DATABASE TABLE

WEB SERVER PROGRAM

72

10

46

TAKE FROM TOP

SERIAL SERVER PROGRAM

86

10

ADD ENTRY TO Q

82

84

SERIAL LINE

50

ADD TO Q

FIG. 5

74

MONITOR FOR PAGE
RESPONSE

76

PAGE
RESPONSE
RECIEVED?

NO

YES

78

SPECIAL PAGE
RESPONSED?

NO

YES

80

SERVICE PAGE
RESPONSE

82

ADD RESPONSE
TO TRANSMISSION
QUEUE

# FIG. 6

PACKET FORMAT    90

| 92 | 94 | 96 | 98 | | 100 | 102 |
|---|---|---|---|---|---|---|
| MARKER | ACTION | LEN | DATA | | CRC | CRLF |

OF DATA

PRIORITY
EG.

32 BIT
CHECK

S = STORED PROCEDURE
C = CREDIT CARD
E = E-MAIL MESSAGE

SEQUENCE SHOWS
START OF MESSAGE

(A)    98
DATA

| 144 | USP-P NAME | ARG |
|---|---|---|

140    146    142    (B)

# FIG. 7

EP 1 182 533 A2

104

86

MONITOR QUEUE 84

106

MESSAGE IN
QUEUE 84?

NO

YES

FIND HIGHEST PRIORITY
MESSAGE

108

SEND MESSAGE TO BACK
END SERVER 48

110

FIG. 8

<u>112</u>

114

NO ◇ MESSAGE 90
RECIEVED?

YES

FIND MARKER &
SYNC 92 — 116

EXTRACT LENGTH
INFORMATION 96 — 118

READ PAYLOAD
DATA 98 — 120

READ CRC DATA 100 — 122

124

NO ◇ CHECK CRC OK?

YES

ACTION PAYLOAD — 126

# FIG. 9

127

ACTION PAYLOAD —126

PAYLOAD ACTION EXISTS 128

NO → DUMP MESSAGE 130

114

YES

PROCESS PAYLOAD —132

114

## FIG. 10A

| ALLOWABLE STORED PROCEDURES |
| --- |
| P-NAME (1) |
| P-NAME (2) |
| P-NAME (3) |
| P-NAME (N) |

129

## FIG. 10B

SERIAL LINK

1. WHEN B IS DISCONNECTED A KNOWS THIS BY NOW ASSERTION OF DTR SIGNAL
   (NO HOST)
2. WHEN B IS BUSY IT ASSERTS C75 TO STOP A SENDING MORE DATA
   (FLOW CONTROL)

# FIG. 11

EP 1 182 533 A2

COMMAND MODE

48

50        SCROLL

10

170

PROC. A

I<

1. 48 COMMANDS TO TO STOP SENDING
2. 48 COMMANDS TO TO START 10CMD
        SHELL
3. COMMANDS TYPED TO PROGRAM ON 48 ARE EXECUTION COMPUTER 10.
        RESULTS OF THE COMMAND ARE SENT TO SCREEN ON 48

111

CMD SHELL

# FIG. 12

EP 1 182 533 A2

TRANSMISSION

READ Q AND
FORMAT

→ SERIAL PORT 50

176

172

NEW COMMAND 174

170

PROC, RAM

DATABASE OF
COMMANDS

FIG. 13